# EUROPÄISCHE PATENTSCHRIFT

(11) **EP 4 466 158 B1**
(45) Veröffentlichungstag und Bekanntmachung des Hinweises auf die Patenterteilung: **01.04.2026**
(21) Anmeldenummer: 23703108.3
(22) Anmeldetag: 19.01.2023
(51) Int. Cl.: B60N 2/015, B60N 2/07, B60N 2/68, F16B 37/04

(54) **BEFESTIGUNGSVORRICHTUNG ZUM VERBINDEN EINES SCHIENENELEMENTS MIT EINEM STRUKTURELEMENT EINES FAHRZEUGS UND SCHIENENELEMENT**
FASTENING DEVICE FOR CONNECTING A RAIL ELEMENT TO A STRUCTURAL ELEMENT OF A VEHICLE, AND RAIL ELEMENT
DISPOSITIF DE FIXATION POUR RELIER UN ÉLÉMENT DE RAIL À UN ÉLÉMENT DE STRUCTURE D'UN VÉHICULE ET ÉLÉMENT DE RAIL

(30) Priorität: 21.01.2022 DE 102022200686; 05.05.2022 DE 102022204449
(43) Veröffentlichungstag der Anmeldung: 27.11.2024
(73) Patentinhaber: Adient US LLC, Plymouth MI 48170 (US)
(72) Erfinder: SPRENGER, Erik, 42929 Wermelskirchen (DE)
(74) Vertreter: Liedtke & Partner Patentanwälte
(86) Internationale Anmeldenummer: PCT/IB2023/050456
(87) Internationale Veröffentlichungsnummer: WO 2023/139511

(56) Entgegenhaltungen:
- EP-A1- 0 272 495
- EP-A2- 1 529 965
- EP-B1- 1 637 750
- EP-B1- 1 927 500
- DE-U1- 202017 102 070
- FR-A1- 2 728 203
- FR-A1- 2 870 177

## Beschreibung

Die Erfindung betrifft eine Befestigungsvorrichtung zum Verbinden eines Schienenelements mit einem Strukturelement eines Fahrzeugs und ein Schienenelement mit einer solchen Befestigungsvorrichtung.

Gattungsgemäße Befestigungsvorrichtungen zum Verbinden eines Schienenelements einer Verstelleinrichtung zur Längsverstellung eines Fahrzeugsitzes sind üblicherweise als eine vormontierte Baugruppe gefertigt, welche erst bei ihrer Endmontage einerseits mit einem Fahrzeugsitz und andererseits mit einem Strukturelement des Fahrzeugs, wie einem Fahrzeugboden, verbunden werden.

Befestigungsvorrichtungen für Schienensysteme sind beispielsweise aus der EP 1 529 965 A2 und der EP 1 927 500 B1 bekannt.

Aufgabe der vorliegenden Erfindung ist es, eine Befestigungsvorrichtung der eingangs genannten Art anzugeben, welche vormontierbar und vorfixierbar ausgestaltet ist und welche eine verbesserte Festigkeit aufweist. Darüber hinaus ist ein Schienenelement mit einer verbesserten Befestigungsvorrichtung anzugeben.

Hinsichtlich der Befestigungsvorrichtung wird die Aufgabe erfindungsgemäß durch die im Anspruch 1 angegebenen Merkmale gelöst. Hinsichtlich des Schienenelements wird die Aufgabe erfindungsgemäß durch die im Anspruch 14 angegebenen Merkmale gelöst.

Die Aufgabe wird erfindungsgemäß mit einer Befestigungsvorrichtung gelöst, welche die technische Merkmale des Anspruchs 1 aufweist, wobei zum Beispiel die erste Festigkeit kleiner als die zweite Festigkeit ist und wobei der Bolzen mittels Selbsthemmung in der Durchgangsöffnung vorfixiert und gehalten ist.

Die Sicherungsscheibe kann zur Vorfixierung des Bolzens an einem Innenumfang der Durchgangsöffnung zumindest eine Nase aufweisen. Die zumindest eine Nase kann in die Durchgangsöffnung hineinragen. Die zumindest eine Nase kann vom Innenumfang der Durchgangsöffnung abragen oder abstehen. Die Vorfixierung des Bolzens kann durch eine Selbsthemmung des Bolzens in der Durchgangsöffnung mittels der zumindest einen Nase erfolgen. Beim Fügen von Bolzen und Sicherungsscheibe kann die Nase mit Übermaß in einen Reibschluss mit dem einen Außengewindegang oder Außengewindegängen des Bolzens gelangen. Aufgrund der geringeren Festigkeit der Sicherungsscheibe kann es dabei zu einer Deformation der Nase ohne Beschädigung des Bolzens, insbesondere des Außengewindes, kommen. Beispielsweise wird eine Oberfläche der Nase geglättet. Dadurch wird das Übermaß der Nase auf ein den Reibschluss bewirkendes und wirksames Übermaß reduziert.

Die Sicherungsscheibe kann zur Vorfixierung des Bolzens mittels Selbsthemmung an einem Innenumfang der Durchgangsöffnung eine Mehrzahl von Nasen, beispielsweise zwei Nasen, insbesondere drei oder mehr Nasen, aufweisen. Die Nasen sind mit einem Höhenversatz zueinander an dem Innenumfang der Durchgangsöffnung angeformt, insbesondere geprägt. Im zusammengesetzten Zustand greifen die Nasen in die Außengewindegänge des Bolzens ein und sind mittels Reibschluss vorfixiert und gehalten. Hierzu weisen beispielsweise die Nasen größere Abmessungen auf als die der Außengewindegänge des Bolzens. Beim Fügen von Bolzen und Sicherungsscheibe gelangen somit die Nasen mit Übermaß in einen Reibschluss mit den Außengewindegängen des Bolzens. Aufgrund der geringeren Festigkeit der Sicherungsscheibe kann es dabei zu einer Deformation der Nasen ohne Beschädigung des Bolzens, insbesondere des Außengewindes, kommen. Beispielsweise werden die Oberflächen der Nasen geglättet. Dadurch wird das Übermaß der Nasen auf ein den Reibschluss bewirkendes und wirksames Übermaß reduziert. Mit anderen Worten: Aufgrund des Übermaßes der Nasen kommt es beim Fügen von Sicherungsscheibe und Bolzen zu einem Plastifizieren und zu einer Reibschlussverbindung zwischen Bolzen und Sicherungsscheibe. Dabei können die Nasen am Innenumfang symmetrisch verteilt vorgesehen, insbesondere angeformt oder angeordnet, sein. Für eine axialsymmetrische Vorfixierung des Bolzens in der Sicherungsscheibe sind bevorzugt drei Nasen symmetrisch verteilt am Innenumfang der Durchgangsöffnung vorgesehen. Auch kann die Sicherungsscheibe zwei sich gegenüberliegende Nasen aufweisen. Diese Anordnung des Bolzens in der Sicherungsscheibe mit drei symmetrisch verteilt angeordneten Nasen wird auch als Dreipunktlage des Bolzens in der Sicherungsscheibe bezeichnet.

Die Sicherungsscheibe kann zur Vorfixierung des Bolzens mittels Selbsthemmung an einem Innenumfang der Durchgangsöffnung ein Innengewinde mit einer Innengewindesteigung aufweisen. Der Bolzen weist mindestens ein Außengewinde mit einer Außengewindesteigung auf. Die Innengewindesteigung der Durchgangsöffnung weicht von der Außengewindesteigung des Bolzens ab. Mit anderen Worten: Im zusammengesetzten Zustand ist der Bolzen mittels Selbsthemmung von Außengewinde und Innengewinde in der Sicherungsscheibe vorfixiert und gehalten. Die Außengewindesteigung des Bolzens ist hierzu verschieden zur Innengewindesteigung der Durchgangsöffnung der Sicherungsscheibe.

Die Sicherungsscheibe kann als Beilagscheibe ausgebildet sein. Die Sicherungsscheibe kann eine quadratische beziehungsweise rechteckige Außenkontur aufweisen. Die Sicherungsscheibe kann eine vergleichsweise geringe Wandstärke aufweisen, beispielsweise von 2 mm bis 5 mm, wobei eine Festigkeit über ein Vergüten erreicht werden kann.

Zur Vorbefestigung des Bolzens oder einer Schraube kann die Sicherungsscheibe in der Durchgangsöffnung einen einvulkanisierten Ring aufweisen. Der Ring kann beispielsweise aus einem Gummimaterial, beispielsweise aus so genanntem EPDM, ausgebildet sein. Der Ring kann in der Durchgangsöffnung zumindest teilweise stoffschlüssig angebracht sein. Durch die Vorbefestigung des Bolzens oder der Schraube in der Sicherungsscheibe ist eine weitere Vorbefestigung der Scherungsscheibe nicht erforderlich. Die Sicherungsscheibe kann in einem Kanal geführt und mit dem Bolzen oder der Schraube in Position gehalten werden. Der Ring kann ein ringförmiges Dichtungselement sein. Der Bolzen oder die Schraube kann beim Fügen mit der Sicherungsscheibe in einen selbsthemmenden Eingriff, insbesondere einen Reibschluss, mit dem Ring in der Durchgangsöffnung gelangen.

Ein Ausführungsbeispiel sieht vor, dass die Sicherungsscheibe oder Beilagscheibe am Außenumfang die Aussparung, insbesondere bogenförmig oder eckig, umfassen kann. Beispielsweise kann die Aussparung am Außenumfang mittels Prägung in die Außenkontur der Sicherungsscheibe eingebracht werden. Die Aussparung ist beispielsweise eine Freimachung. Die Aussparung wird in die Außenkontur der Sicherungsscheibe oder Beilagscheibe eingestanzt. Die Aussparung wird als Bogen oder als Ecke ausgeführt. Die Aussparung wird beispielsweise durch eine Verprägung auf einer einem Profil zugewandten Seite ausgeführt.

Zusätzlich können die Richtungselemente und/oder Markierungselemente, wie zum Beispiel Richtungsvorsprünge und/oder Markierungsvorsprünge, am Außenumfang, insbesondere an einem Seitenumfang, vorgesehen sein.

Ein Ausführungsbeispiel sieht vor, dass das zumindest eine Richtungselement einer Oberflächenseite der Sicherungsscheibe abragt. Um einen falschen Verbau der Sicherungsscheibe oder Beilagscheibe zu vermeiden, ist das zumindest eine Richtungselement und/oder Markierungselement vorgesehen. Das Richtungselement und/oder Markierungselement sind/ist als Nase, insbesondere für eine so genannte Poka-Voke Maßnahme, in die Sicherungsscheibe oder Beilagscheibe eingebracht. Hierdurch kann die Sicherungsscheibe oder Beilagscheibe nicht verkehrt herum in einen Führungskanal des Schienenelements eingeschoben werden.

Die Aufgabe wird erfindungsgemäß gelöst mit einem Schienenelement, das mindestens eine mit einem Strukturelement eines Fahrzeugs verbindbare Profilschiene umfasst, welche einen Bodenbereich mit mindestens einer Montageöffnung und zwei vom Bodenbereich abragende Seitenwände sowie eine oder mehrere in der Profilschiene an den Seitenwänden innenliegend angeordnete Führungsflächen oder Führungsbahnen aufweist, wobei die zuvor beschriebene Befestigungsvorrichtung derart in dem Schienenelement anordenbar ist, dass die Sicherungsscheibe mit ihrer Durchgangsöffnung über der Montageöffnung liegt und der Bolzen zwischen den Seitenwänden in die Durchgangsöffnung der Sicherungsscheibe diese durchgreifend und in die Montageöffnung der Profilschiene teilweise eingreifend anordenbar, insbesondere in der Durchgangsöffnung der Sicherungsscheibe, mittels Selbsthemmung vorfixierbar und gehalten ist.

Die mit der Erfindung erzielten Vorteile bestehen insbesondere darin, dass eine solche Befestigungsvorrichtung für ein Schienenelement eines Längsverstellers variabel und sicher montiert werden kann. Zudem ermöglicht es eine höhere Festigkeit der Befestigungsvorrichtung und damit der Verbindung des Schienenelements mit einem Strukturelement des Fahrzeugs.

Ausführungsbeispiele der Erfindung werden anhand von Zeichnungen näher erläutert. Dabei zeigen:
- Figur 1: in schematischer Darstellung einen Fahrzeugsitz mit einer Längsverstelleinrichtung nach dem Stand der Technik,
- Figur 2: schematisch in perspektivischer Darstellung ein erstes Ausführungsbeispiel, welches nicht zur beanspruchten Erfindung
- gehört,: einer Sicherungsscheibe für eine Befestigungsvorrichtung eines Schienenelements einer Längsverstelleinrichtung,
- Figur 3: schematisch in Seitenansicht ein erstes Ausführungsbeispiel, welches nicht zur beanspruchten Erfindung gehört, einer Befestigungsvorrichtung mit Sicherungsscheibe und vorfixiertem Bolzen,
- Figur 4: schematisch eine Draufsicht auf die Sicherungsscheibe nach Figur 2,
- Figur 5: schematisch in Schnittdarstellung ein erstes Ausführungsbeispiel, welches nicht zur beanspruchten Erfindung gehört, eines Schienenelements mit eingeführter Sicherungsscheibe,
- Figur 6: schematisch in Schnittdarstellung ein erstes Ausführungsbeispiel, welches nicht zur beanspruchten Erfindung gehört, des Schienenelements mit eingeführter Sicherungsscheibe und mit in der Sicherungsscheibe vorfixiertem Bolzen,
- Figur 7: schematisch eine Schnittdarstellung des ersten Ausführungsbeispiels des Schienenelements mit eingeführter Sicherungsscheibe und im zusammengesetzten Zustand mit einem Strukturelement eines Fahrzeugs, wobei der Bolzen das Schienenelement und das Strukturelement miteinander verbindet,
- Figur 8: schematisch in perspektivischer Darstellung ein Schienenelement mit eingeführter Sicherungsscheibe,
- Figur 9: schematisch in perspektivischer Darstellung ein Schienenelement mit eingeführter Sicherungsscheibe und vorfixiertem Bolzen,
- Figur 10: schematisch in perspektivischer Darstellung ein zweites Ausführungsbeispiel einer Sicherungsscheibe für eine Befestigungsvorrichtung, die zur beanspruchten Erfindung gehört,
- Figur 11: schematisch in Seitenansicht ein zweites Ausführungsbeispiel, welches zur beanspruchten Erfindung gehört, eines Schienenelements mit einer Befestigungsvorrichtung mit eingeführter Sicherungsscheibe,
- Figur 12: schematisch eine Schnittdarstellung des zweiten Ausführungsbeispiels des Schienenelements mit eingeführter Sicherungsscheibe und mit in der Sicherungsscheibe vorfixiertem Bolzen,
- Figur 13: schematisch eine Schnittdarstellung des zweiten Ausführungsbeispiels des Schienenelements mit eingeführter Sicherungsscheibe und im zusammengesetzten Zustand mit einem Strukturelement eines Fahrzeugs, wobei der Bolzen das Schienenelement und das Strukturelement miteinander verbindet,
- Figur 14: schematisch in perspektivischer Darstellung eine erste alternative Form einer Sicherungsscheibe, die nicht zur beanspruchten Erfindung gehört,
- Figur 15: schematisch in perspektivischer Darstellung eine zweite alternative Form einer Sicherungsscheibe, die nicht zur beanspruchten Erfindung gehört,
- Figur 16: schematisch in Unteransicht eine dritte alternative Form einer Sicherungsscheibe, die zur beanspruchten Erfindung gehört,
- Figur 17: schematisch in Schnittdarstellung die Sicherungsscheibe nach Figur 16,
- Figur 18: schematisch in Draufsicht die Sicherungsscheibe nach Figur 16, und
- Figur 19: schematisch in perspektivischer Darstellung die Sicherungsscheibe nach Figur 16.

Einander entsprechende Teile sind in allen Figuren mit den gleichen Bezugszeichen versehen.

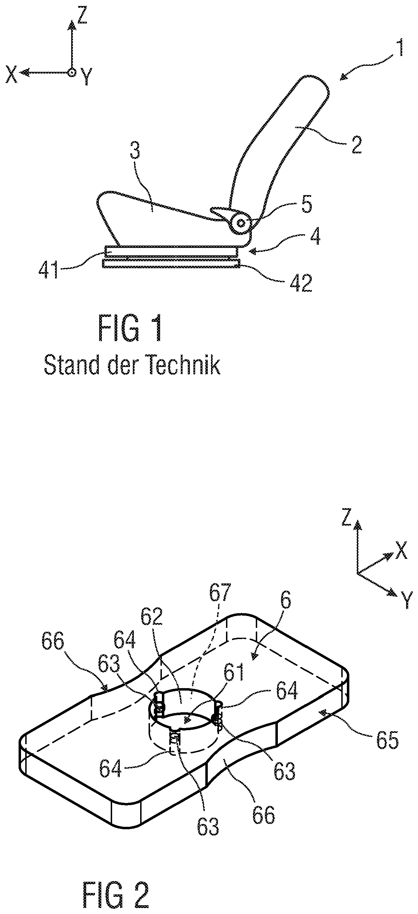

Ein in der Figur 1 zum Stand der Technik schematisch dargestellter Fahrzeugsitz 1 wird nachfolgend unter Verwendung von drei senkrecht zueinander verlaufenden Raumrichtungen beschrieben. Eine Längsrichtung X verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeugs entspricht. Eine zu der Längsrichtung X senkrecht verlaufende Querrichtung Y ist im Fahrzeug ebenfalls horizontal ausgerichtet und verläuft parallel zu einer Fahrzeugquerrichtung. Eine Vertikalrichtung Z verläuft senkrecht zu der Längsrichtung X und senkrecht zu der Querrichtung Y. Bei einem im Fahrzeug eingebauten Fahrzeugsitz 1 verläuft die Vertikalrichtung Z vorzugsweise parallel zu einer Fahrzeughochachse.

Die verwendeten Positionsangaben und Richtungsangaben, wie beispielsweise vorne, hinten, oben und unten, beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Rückenlehne 2 und wie üblich in Fahrtrichtung ausgerichtet ist. Der Fahrzeugsitz 1 kann jedoch auch in abweichender Ausrichtung, beispielsweise quer zur Fahrtrichtung, verbaut oder bewegt werden.

Die Rückenlehne 2 kann schwenkbar an einem Sitzteil 3 des Fahrzeugsitzes 1 angeordnet sein. Hierzu kann der Fahrzeugsitz 1 einen Beschlag 5, insbesondere einen Drehbeschlag, wie zum Beispiel einen Rastbeschlag oder Taumelbeschlag, umfassen.

Der Fahrzeugsitz 1 kann eine Längsverstelleinrichtung 4, insbesondere eine Schienenanordnung mit einem ersten Schienenelement 41 und einem zweiten Schienenelement 42, umfassen. Das erste Schienenelement 41 ist relativ in Längsrichtung X zum zweiten Schienenelement 42 verstellbar. Das erste Schienenelement 41 ist an dem Sitzteil 3 befestigt. Das zweite Schienenelement 42 ist an einem Strukturelement 9 eines Fahrzeugs, zum Beispiel einem Fahrzeugboden, befestigt.

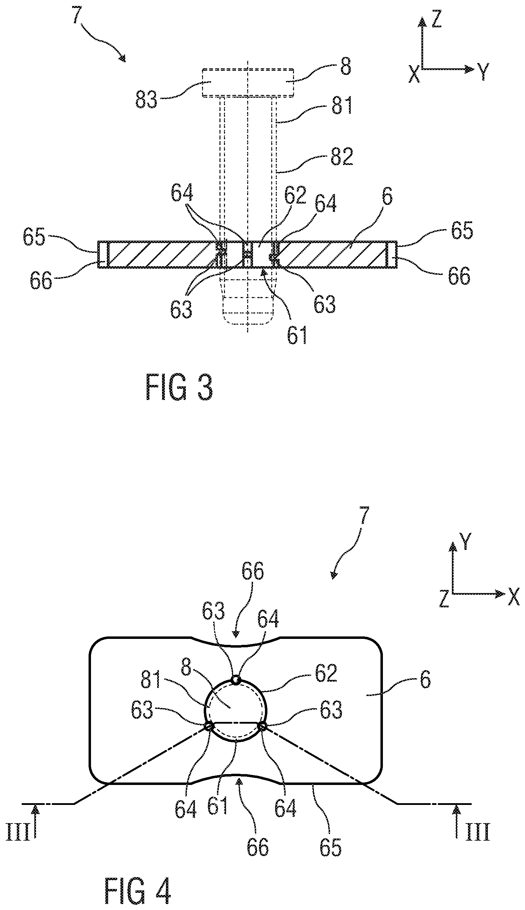

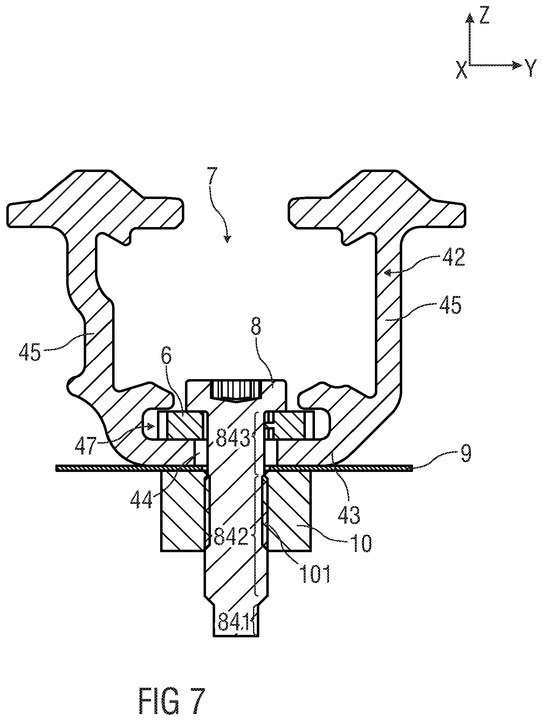

Figur 2 zeigt schematisch in perspektivischer Darstellung ein erstes Ausführungsbeispiel einer Sicherungsscheibe 6 für eine Befestigungsvorrichtung 7 (dargestellt in Figur 3). Mittels der Befestigungsvorrichtung 7 kann das zweite Schienenelement 42 an einem Strukturelement 9 (dargestellt in Figur 7), wie zum Beispiel einem Fahrzeugboden eines Fahrzeugs, befestigt werden.

Die Befestigungsvorrichtung 7 umfasst mindestens die eine Sicherungsscheibe 6 und einen Bolzen 8, der in den Figuren 3, 6, 7, 9, 12 und 13 dargestellt ist.

Die Sicherungsscheibe 6 umfasst eine Durchgangsöffnung 61. Die Sicherungsscheibe 6 umfasst zur Vorfixierung des Bolzens 8 mittels Selbsthemmung beispielsweise an einem Innenumfang 62 der Durchgangsöffnung 61 eine Mehrzahl von Nasen 63, insbesondere drei oder mehr Nasen 63. Die Nasen 63 sind in Vertikalrichtung Z mit einem Höhenversatz zueinander angeordnet. Insbesondere sind die Nasen 63 an dem Innenumfang 62 angeformt, insbesondere geprägt. Beispielsweise können die Nasen 63 in Kerben 64, insbesondere länglichen Vertiefungen, angeordnet sein. Dabei weisen die Nasen 63 derartige Abmessungen und/oder eine derartige Form auf, dass diese über den Innenumfang 62 hinaus teilweise in die Durchgangsöffnung 61 hineinragen.

Dabei können die Nasen 63 am Innenumfang 62 symmetrisch verteilt angeordnet sein. Für eine axialsymmetrische Vorfixierung des Bolzens 8 in der Sicherungsscheibe 6 sind bevorzugt drei Nasen 63 symmetrisch verteilt am Innenumfang 62 der Durchgangsöffnung 61 vorgesehen. Diese Vorfixierung des Bolzens 8 in der Sicherungsscheibe 6 mit drei symmetrisch verteilt angeordneten Nasen 63 wird auch als Dreipunktlage des Bolzens 8 in der Sicherungsscheibe 6 bezeichnet.

Die Sicherungsscheibe 6 kann zusätzlich am Außenumfang 65 mindestens eine Aussparung 66, insbesondere zwei Aussparungen 66, umfassen. Die Aussparungen 66 können bogenförmig ausgestaltet sein. Auch kann die jeweilige Aussparung 66 eine andere geeignete Form, zum Beispiel eine mehreckige Form, aufweisen. Die jeweilige Aussparung 66 am Außenumfang 65 kann zum Beispiel mittels Prägung in die Außenkontur der Sicherungsscheibe 6 eingebracht sein.

Die Sicherungsscheibe 6 weist insbesondere eine Dicke oder Wandstärke von 3 mm bis 5 mm, insbesondere von 4 mm bis 4,5 mm, bevorzugt von 4,5 mm auf.

Die Sicherungsscheibe 6 weist eine hohe Wandstärke und damit eine hohe Steifigkeit auf. Dies verbessert die Kraftübertragung von der Schraube oder dem Bolzen 8 (dargestellt in Figur 3) zum zweiten Schienenelement 42, insbesondere einem Aluminiumprofil einer Unterschiene. Dabei kann weiterhin das Problem bestehen, dass direkt seitlich eines Bolzenkopfes 83 (dargestellt in Figur 3) eine Spannungskonzentration im zweiten Schienenelement 42, insbesondere im Unterschienenprofil, gegeben ist. Die Sicherungsscheibe 6 weist hierzu in diesen Bereichen die Aussparungen 66, insbesondere eine Freimachung, am Außenumfang 65 auf, um eine Verbesserung der Spannungsverteilung im zweiten Schienenelement 42, zum Beispiel einem Unterschienenprofil, zu erreichen.

Die Freimachung oder Aussparung 66 kann in verschiedenen Ausführungsmöglichkeiten umgesetzt werden. Beispielsweise kann die Aussparung 66 in die Außenkontur der Sicherungsscheibe 6 eingestanzt werden. Die jeweilige Aussparung 66 kann als Bogen oder eckig ausgeführt sein. Die jeweilige Aussparung 66 kann alternativ durch eine Verprägung auf der dem zweiten Schienenelement 42 zugewandten Seite ausgeführt sein.

In einem zweiten, nicht näher dargestellten Ausführungsbeispiel weist die Sicherungsscheibe 6 zur Vorfixierung des Bolzens 8 mittels Selbsthemmung an dem Innenumfang 62 der Durchgangsöffnung 61 anstelle der Nasen 63 ein Innengewinde 67 mit einer Innengewindesteigung auf. Der Bolzen 8 weist das mindestens eine Außengewinde 81 (dargestellt in Figur 3) mit einer Außengewindesteigung auf. Die Innengewindesteigung des Innengewindes 67 in der Durchgangsöffnung 61 der Sicherungsscheibe 6 weicht von der Außengewindesteigung des Außengewindes 81 des Bolzens 8 ab. Mit anderen Worten: Im zusammengesetzten Zustand ist der Bolzen 8 mittels Selbsthemmung von Außengewinde 81 und Innengewinde (nicht dargestellt) in der Durchgangsöffnung 61 der Sicherungsscheibe 6 vorfixiert und gehalten. Die Außengewindesteigung des Bolzens 8 ist hierzu verschieden zur Innengewindesteigung in der Durchgangsöffnung 61 der Sicherungsscheibe 6.

Durch die abweichende Steigung von Außengewinde 81 des Bolzens 8 und Innengewinde 67 der Sicherungsscheibe 6 kommt es zu einer Selbsthemmung des Bolzens 8 in der Durchgangsöffnung 61 der Sicherungsscheibe 6.

Der Innerdurchmesser der Durchgangsöffnung 61 kann zudem derart ausgelegt sein, dass die Sicherungsscheibe 6 im durchgeschraubten Bereich des Bolzens 8 außer Eingriff zum Außengewinde 81 kommt. Der Bolzen 8 hat hierfür nur ein Teilgewinde mit zum Beispiel M10 und einen Schaftdurchmesser von etwa 9 mm. Der Bohrungsdurchmesser der Durchgangsöffnung 61 kann beispielsweise zwischen 9,2 mm und 9,5 mm liegen. Der Bolzen 8 weist mindestens ein Teilaußengewinde auf. Das Teilaußengewinde des Bolzens 8 ist erforderlich, um ein sicheres Erreichen der festen Verschraubung sicherzustellen.

Figur 3 zeigt schematisch in Seitenansicht das erste Ausführungsbeispiel der Befestigungsvorrichtung 7 mit der Sicherungsscheibe 6 mit drei Nasen 63 in der Durchgangsöffnung 61 zur selbsthemmenden Vorfixierung des Bolzens 8.

Die Sicherungsscheibe 6 weist eine erste Festigkeit und der Bolzen 8 eine zweite Festigkeit auf. Bevorzugt ist die erste Festigkeit der Sicherungsscheibe 6 kleiner als die zweite Festigkeit des Bolzens 8. Durch die geringere erste Festigkeit der Sicherungsscheibe 6 gegenüber der zweiten Festigkeit des Bolzens 8 ist eine Deformation der Nasen 63 ohne Beschädigung oder Deformation des Bolzens 8 ermöglicht.

Der Bolzen 8 weist mindestens ein Außengewinde 81 mit mehreren Außengewindegängen 82 auf.

Beim Fügen und im zusammengesetzten Zustand greifen die Nasen 63 in die Außengewindegänge 82 des Bolzens 8 ein. Hierdurch wird oder ist der Bolzen 8 mittels Selbsthemmung, insbesondere mittels Reibschluss, vorfixiert und gehalten. Durch den Reibschluss wird der Bolzen 8 in Position gehalten. Dabei weisen beispielsweise die Nasen 63 größere Abmessungen auf als die der Außengewindegänge 82 des Bolzens 8.

Der Höhenversatz der Nasen 63 entspricht der Steigung des Außengewindes 81 des Bolzens 8.

Beim Fügen von Bolzen 8 und Sicherungsscheibe 6 gelangen diese Nasen 63 mit Übermaß in einen Reibschluss mit den Außengewindegängen 82 des Bolzens 8. Aufgrund der geringeren Festigkeit der Sicherungsscheibe 6 kommt es dabei zu einer Deformation der Nasen 63 ohne Beschädigung des Bolzens 8, insbesondere des Außengewindes 81. Beispielsweise werden die Oberflächen der Nasen 63 geglättet. Insbesondere wird das Übermaß der Nasen 63 auf ein den Reibschluss bewirkendes und wirksames Übermaß reduziert. Das Übermaß, insbesondere eine Höhe, der Nasen 63 ist beispielsweise so ausgelegt, dass die Nasen 63 im durchgeschraubten Bereich des Bolzens 8 außer Eingriff zum Außengewinde 81 kommen. Die Schraube oder der Bolzen 8 weisen hierfür beispielsweise nur ein Teilaußengewinde mit zum Beispiel M10 und einen Schaftdurchmesser von etwa 9 mm auf.

Mit anderen Worten: Aufgrund des Übermaßes der Nasen 63 kommt es beim Fügen von Sicherungsscheibe 6 und Bolzen 8 zu einem Plastifizieren und zu einer Reibschlussverbindung zwischen Bolzen 8 und Sicherungsscheibe 6.

Figur 4 zeigt schematisch eine Draufsicht auf die Befestigungsvorrichtung 7 mit Sicherungsscheibe 6 nach Figur 2 mit den seitlichen Aussparrungen 66 in Form von Einwölbungen in den Außenumfang 65 und den Nasen 63 in dem Innenumfang 62 und dem an den Nasen 63 mittels Selbsthemmung vorfixierten Bolzen 8 gemäß Figur 3.

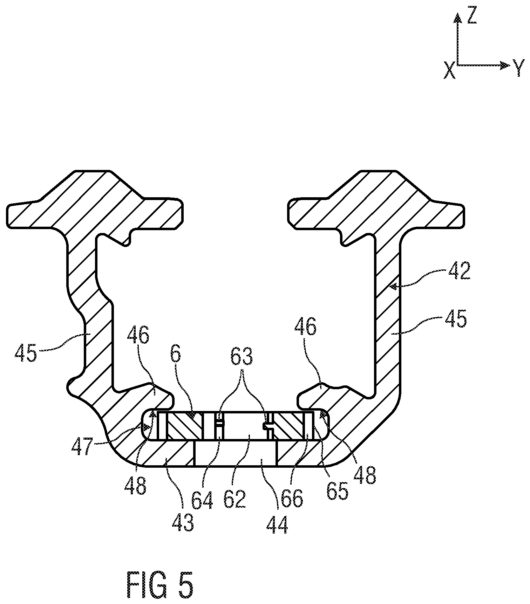

Figur 5 zeigt schematisch eine Schnittdarstellung eines ersten Ausführungsbeispiels eines zweiten Schienenelements 42, insbesondere eines unteren Schienenprofils, der Längsverstelleinrichtung 4 mit in das zweite Schienenelement 42 eingeführter Sicherungsscheibe 6.

Das zweite Schienenelement 42 weist einen Bodenbereich 43 mit mindestens einer Montageöffnung 44, insbesondere einer Durchgangsbohrung, auf. Von dem Bodenbereich 43 ragen zwei Seitenwände 45 senkrecht ab. Das zweite Schienenelement 42 umfasst darüber hinaus eine oder mehrere in an den Seitenwänden 45 innenliegend angeordnete Führungsbahnen 46. Die Führungsbahnen 46 dienen beispielsweise als Rollflächen oder Gleitflächen für Rollen beziehungsweise Gleitelemente des ersten Schienenelements 41.

Die zuvor beschriebene Befestigungsvorrichtung 7 ist in dem zweiten Schienenelement 42 anordenbar, insbesondere einführbar. Insbesondere wird die Sicherungsscheibe 6 in einen Führungskanal 47, der zwischen einer Unterseite 48 der Führungsbahnen 46 und dem Bodenbereich 43 gebildet ist, eingeführt und ist in diesem Führungskanal 47 längsbeweglich, insbesondere in Längsrichtung X relativ zum zweiten Schienenelement 42 beweglich, angeordnet. Der Führungskanal 47 und die Führungsbahnen 46 können sich insbesondere über die gesamte Länge des zweiten Schienenelements 42 erstrecken.

Die Sicherungsscheibe 6 wird derart in den Führungskanal 47 eingeführt und positioniert, dass diese mit ihrer Durchgangsöffnung 61 über der Montageöffnung 44 liegt. Das zweite Schienenelement 42 kann dabei ein oder mehrere, insbesondere zwei oder drei, Montageöffnungen 44 aufweisen. Entsprechend der Anzahl der Montageöffnungen 44 ist eine entsprechende Anzahl von Sicherungsscheiben 6 in das zweite Schienenelement 42, insbesondere in den Führungskanal 47, einführbar und jeweils eine der Sicherungsscheiben 6 über eine der Montageöffnungen 44 positionierbar. Mit anderen Worten: Die Sicherungsscheiben 6 sind im zweiten Schienenelement 42 variabel positionierbar.

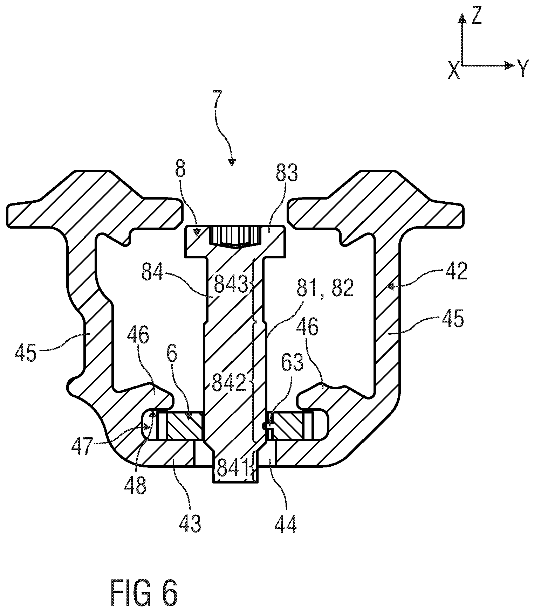

Figur 6 zeigt schematisch eine Schnittdarstellung des ersten Ausführungsbeispiels des zweiten Schienenelements 42 mit eingeführter Sicherungsscheibe 6 und mit in der Sicherungsscheibe 6 vorfixiertem Bolzen 8.

Der Bolzen 8 wird zwischen den Seitenwänden 45 in die Durchgangsöffnung 61 der Sicherungsscheibe 6 eingeführt. Der Bolzen 8 umfasst den Bolzenkopf 83 und einen Schaft 84. Der Schaft 84 weist einen Einführbereich 841, einen Teilgewindebereich 842 und einen gewindefreien Bereich 843 auf. Das Außengewinde 81 erstreckt sich über den Teilgewindebereich 842. Der Einführbereich 841 und der gewindefreie Bereich 843 weisen Außenabmessungen auf, die kleiner sind als die Außenabmessungen des Teilgewindebereiches 842.

Der Einführbereich 841 kann ebenfalls gewindefrei ausgeführt sein und dient dem sicheren, insbesondere verkantfreien, Einführen des Bolzens 8 in die Sicherungsscheibe 6 und anschließend in die Montageöffnung 44.

Der Bolzen 8, insbesondere dessen Teilgewindebereich 842, gelangt beim Fügen mit der Sicherungsscheibe 6 in einen selbsthemmenden Eingriff, insbesondere einen Reibschluss, mit den Nasen 63 in der Durchgangsöffnung 61. Hierdurch ist der Bolzen 8 in der Sicherungsscheibe 6 vorfixiert und gehalten. Durch diese Vorbefestigung des Bolzens 8, insbesondere einer Schraube, mittels Selbsthemmung in der Sicherungsscheibe 6 ist keine weitere Vorbefestigung der Sicherungsscheibe 6 erforderlich. Die Sicherungsscheibe 6 kann mit oder ohne vorfixiertem Bolzen 8 in dem zweiten Schienenelement 42 in Position gebracht und gehalten werden.

Bevorzugt durchgreift der Bolzen 8 mit seinem Einführbereich 841 die Sicherungsscheibe 6, so dass zumindest der Einführbereich 841 in die Montageöffnung 44 des zweiten Schienenelements 42 hineinragt oder alternativ durch die Montageöffnung 44 hindurchragt.

Figur 7 zeigt schematisch eine Schnittdarstellung des ersten Ausführungsbeispiels des Schienenelements 42 mit eingeführter Sicherungsscheibe 6 und im zusammengesetzten Endzustand mit einem Strukturelement 9, insbesondere einem Fahrzeugboden eines Fahrzeugs.

Mittels der Befestigungsvorrichtung 7 sind das zweite Schienenelement 42 und das Strukturelement 9 miteinander verbunden. Die Sicherungsscheibe 6 ist beispielsweise aus einem festen Material, insbesondere aus S700MC Material, gebildet. Die Sicherungsscheibe 6 weist eine Wandstärke oder Dicke im mm-Bereich, insbesondere von 3 mm bis 6 mm, zum Beispiel von 4 mm bis 5 mm, bevorzugt von 4,5 mm, auf. Dieses Material mit einer solchen Wandstärke weist eine gute Festigkeit bei geringen Materialkosten auf und benötigt keine Wärmebehandlung. Durch die höhere Wandstärke der Sicherungsscheibe 6 ist zudem die Steifigkeit erhöht. Dies wiederum verbessert eine Kraftübertragung im zusammengesetzten Zustand vom Bolzen 8 zum zweiten Schienenelement 42, zum Beispiel einem Aluminiumprofil einer Unterschiene.

Zur hinreichend festen Verbindung von dem zweiten Schienenelement 42 und dem Strukturelement 9 ist auf einer vom Schienenelement 42 abgewandten Oberflächenseite des Strukturelements 9 ein Befestigungselement 10, insbesondere eine Mutter, angeordnet.

Im zusammengesetzten Endzustand greift das Außengewinde 81 des Bolzens 8 in ein Mutterinnengewinde 101 des Befestigungselements 10 verbindend ein. Der Bolzen 8 ist derart in das Befestigungselement 10 eingeführt, dass der gewindefreie Bereich 843 im Bereich der Durchgangsöffnung 61 der Sicherungsscheibe 6 angeordnet ist. Somit sind der Bolzen 8, insbesondere dessen Teilgewindebereich 842 und die Sicherungsscheibe 6, insbesondere deren Nasen 63, außer Eingriff.

Beim Fügen des Bolzens 8 in das Befestigungselement 10 wird die selbsthemmende Vorfixierung des Bolzens 8 in der Sicherungsscheibe 6 überwunden. Hierzu ist die Sicherungsscheibe 6 in dem Führungskanal 47 zumindest verdrehsicher und axial unbeweglich angeordnet und gehalten.

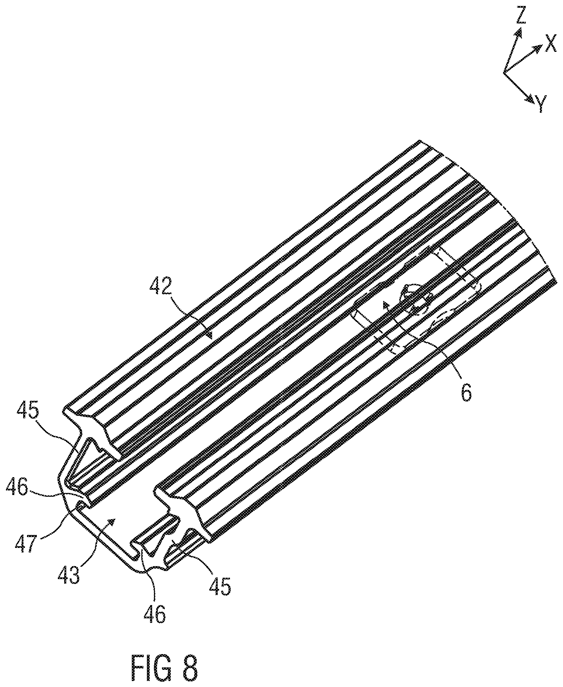

Figur 8 zeigt schematisch in perspektivischer Darstellung ein zweites Schienenelement 42, insbesondere eine Unterschiene, mit einer eingeführten und längsbeweglich anordenbaren Sicherungsscheibe 6. Die Sicherungsscheibe 6 ist in dem Führungskanal 47 eingeführt und weist derartige Abmessungen auf, dass Randbereiche der Sicherungsscheibe 6 unterhalb der Unterseite 48 der Führungsbahnen 46 angeordnet sind. Hierdurch ist die Sicherungsscheibe 6 gegen ein Herausfallen in Vertikalrichtung Z gesichert. Die Sicherungsscheibe 6 weist eine rechteckige Form auf. Insbesondere weist die Sicherungsscheibe 6 solche Außenabmessungen auf, dass diese verdrehsicher in dem Führungskanal 47 angeordnet ist, zumindest gegenüber einer Verdrehung von mehr als 90° verdrehsicher angeordnet ist.

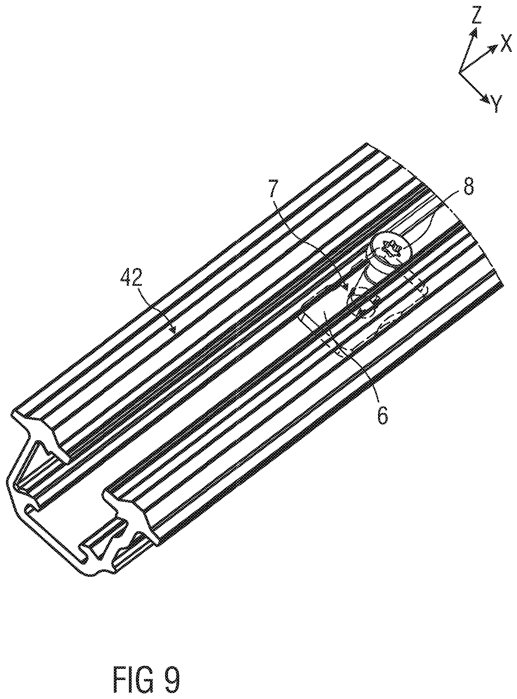

Figur 9 zeigt schematisch in perspektivischer Darstellung das zweite Schienenelement 42 mit der Befestigungsvorrichtung 7 mit eingeführter Sicherungsscheibe 6 und vorfixiertem Bolzen 8.

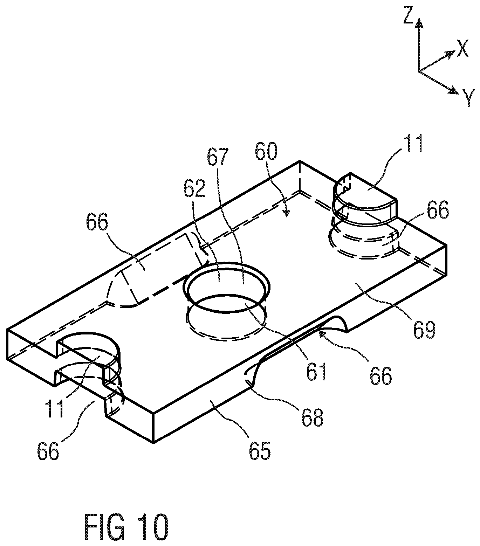

Figur 10 zeigt schematisch in perspektivischer Darstellung ein zweites Ausführungsbeispiel einer Sicherungsscheibe 60 für die Befestigungsvorrichtung 7. Anstelle der bogenförmigen Aussparung 66 der Sicherungsscheibe 6 ist die Aussparung 66 eckig ausgeführt. Um einen fehlerhaften Einbau der Sicherungsscheibe 60 in das zweite Schienenelement 42 zu vermeiden, kann die Sicherungsscheibe 60 zusätzlich Richtungselemente 11, insbesondere Richtungsnasen, aufweisen. Hierdurch kann die Sicherungsscheibe 60 nicht verkehrt herum in den Führungskanal 47 eingeschoben werden. Das Richtungselement 11 ist auf einer der Aussparung 66 gegenüberliegenden Seite angeordnet. Beispielsweise wird das Richtungselement 11 mittels Stempeln und/oder Stanzen in die Sicherungsscheibe 60 eingebracht. Dabei kann die Sicherungsscheibe 60 in Hochrichtung derart verformt werden, dass eine Aussparung 66 auf einer ersten Oberflächenseite 68 und ein Richtungselement 11 auf einer der ersten Oberflächenseite 68 gegenüberliegenden zweiten Oberflächenseite 69 entsteht.

Am Innenumfang 62 der Durchgangsöffnung 61 können die zuvor beschriebenen Nasen 63 oder das zuvor beschriebene, nicht dargestellte Innengewinde zur selbsthemmenden Vorfixierung des Bolzens 8 vorgesehen sein.

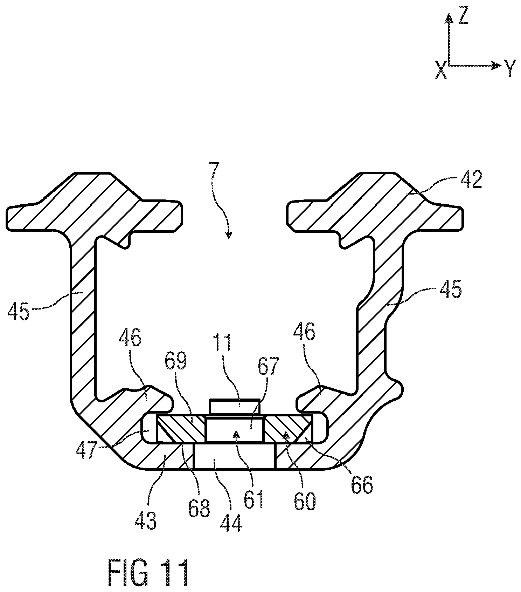

Figur 11 zeigt schematisch in Seitenansicht das zweite Ausführungsbeispiel der Sicherungsscheibe 60 gemäß Figur 10 im in das zweite Schienenelement 42, insbesondere in den Führungskanal 47, eingeführten Zustand.

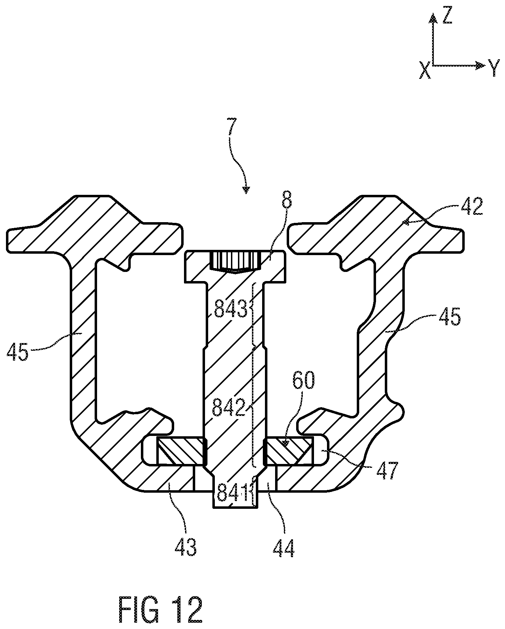

Figur 12 zeigt schematisch eine Schnittdarstellung des zweiten Ausführungsbeispiels der Sicherungsscheibe 60 mit in dieser vorfixiertem Bolzen 8. Es kann der gleiche, wie zuvor beschriebene Bolzen 8 verwendet werden und in analoger Art und Weise in der Sicherungsscheibe 60 mittels Selbsthemmung, zum Beispiel durch Nasen 63 oder durch ein Innengewinde 67, vorfixierbar gehalten werden oder sein.

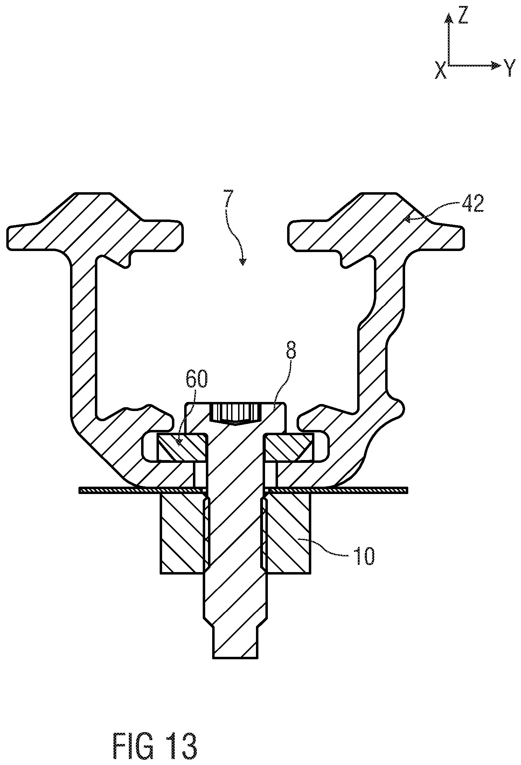

Figur 13 zeigt schematisch eine Schnittdarstellung des zweiten Ausführungsbeispiels der Sicherungsscheibe 60 im zusammengesetzten Endzustand des zweiten Schienenelements 42 mit dem Strukturelement 9 mittels der Befestigungsvorrichtung 7, die diese miteinander verbindet, wie zuvor beschrieben.

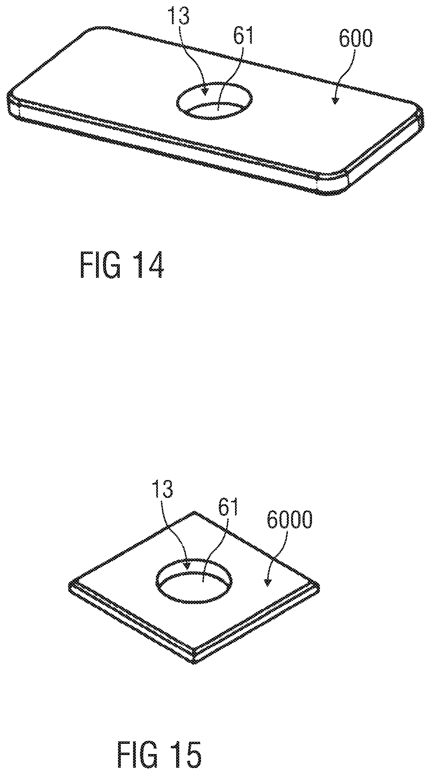

Figur 14 zeigt schematisch in perspektivischer Darstellung eine alternative Form einer Sicherungsscheibe 600 mit Durchgangsöffnung 61 zur selbsthemmenden Vorfixierung des Bolzens 8 und ohne Aussparung 66 und ohne Richtungselement 11. Zur Vorbefestigung des Bolzens 8 kann die Sicherungsscheibe 600 in der Durchgangsöffnung 61 einen Ring 13 aufweisen. Der Ring 13 kann beispielsweise ein O-Ring sein. Der Ring 13 kann ein Dichtungsring sein. Der Ring 13 kann an zumindest einem axialen Ende der Durchgangsöffnung 61 beziehungsweise der Sicherungsscheibe 600 angeordnet sein. Der Ring 13 kann sich zumindest abschnittsweise über die Durchgangsöffnung 61 axial erstrecken. Der Innenumfang 62 der Durchgangsöffnung 61 kann mit dem Ring 13 versehen sein. Der Ring 13 kann beispielsweise mit dem Innenumfang 62 kraftschlüssig, formschlüssig und/oder stoffschlüssig verbunden sein. Eine Höhe des Ringes 13 kann der Wandstärke der Sicherungsscheibe 600 entsprechend ausgebildet sein. Ein Stoffschluss zwischen dem Innenumfang 62 der Durchgangsöffnung 61 und dem Ring 13 kann dadurch herbeigeführt sein, dass der Ring 13 zumindest teilweise oder abschnittsweise in die Durchgangsöffnung 61 einvulkanisiert wird. Der Ring 13 kann beispielsweise aus einem Gummimaterial ausgebildet sein. Der Ring 13 kann aus Ethylen-Propylen-Dien-Kautschuk gebildet sein. Am Innenumfang des Ringes 13 kann ein Gewinde eingebracht sein. Das Gewinde, beispielsweise Innengewinde, des Ringes 13 kann zum Außengewinde 81 des Bolzens 8 korrespondierend ausgebildet sein.

Figur 15 zeigt schematisch in perspektivischer Darstellung eine weitere alternative Form einer Sicherungsscheibe 6000 mit Durchgangsöffnung 61 zur selbsthemmenden Vorfixierung des Bolzens 8 und ohne Aussparung 66 und ohne Richtungselement 11. Zur Vorbefestigung des Bolzens 8 kann die Sicherungsscheibe 6000 in der Durchgangsöffnung 61 einen Ring 13 aufweisen. Der Ring 13 kann beispielsweise ein O-Ring sein. Der Ring 13 kann ein Dichtungsring sein. Der Ring 13 kann an zumindest einem axialen Ende der Durchgangsöffnung 61 beziehungsweise der Sicherungsscheibe 6000 angeordnet sein. Der Innenumfang 62 der Durchgangsöffnung 61 kann mit dem Ring 13 versehen sein. Der Ring 13 kann beispielsweise mit dem Innenumfang 62 kraftschlüssig, formschlüssig und/oder stoffschlüssig verbunden sein. Eine Höhe des Ringes 13 kann der Wandstärke der Sicherungsscheibe 6000 entsprechend ausgebildet sein. Der Ring 13 kann sich zumindest abschnittsweise über die Durchgangsöffnung 61 axial erstrecken. Ein Stoffschluss zwischen dem Innenumfang 62 der Durchgangsöffnung 61 und dem Ring 13 kann dadurch herbeigeführt sein, dass der Ring 13 zumindest teilweise oder abschnittsweise in die Durchgangsöffnung 61 einvulkanisiert wird. Der Ring 13 kann beispielsweise aus einem Gummimaterial ausgebildet sein. Der Ring 13 kann aus Ethylen-Propylen-Dien-Kautschuk gebildet sein. Am Innenumfang des Ringes 13 kann ein Gewinde eingebracht sein. Das Gewinde, beispielsweise Innengewinde, des Ringes 13 kann mit dem Außengewinde 81 des Bolzens 8 korrespondieren.

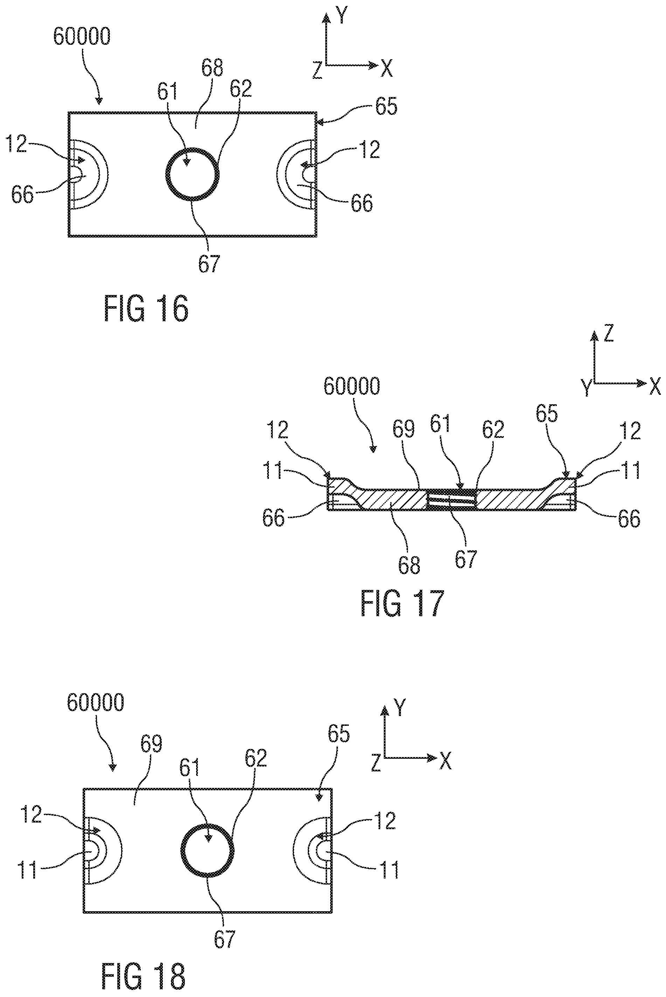

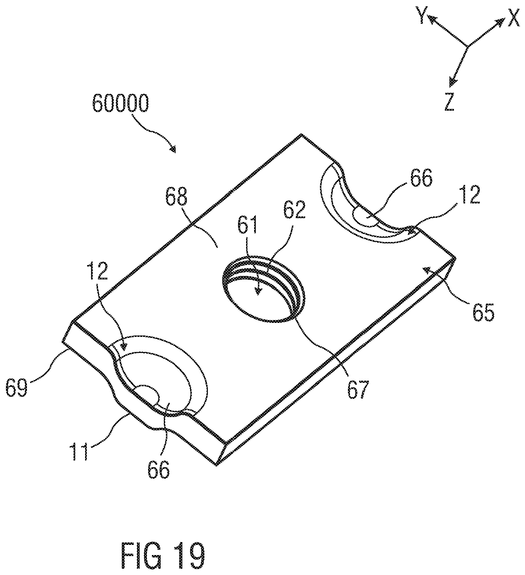

Figur 16 zeigt schematisch in Unteransicht eine weitere alternative Form einer Sicherungsscheibe 60000. Figur 17 zeigt schematisch in Schnittdarstellung die Sicherungsscheibe 60000, Figur 18 zeigt schematisch in Draufsicht die Sicherungsscheibe 60000 und Figur 19 zeigt schematisch in perspektivischer Darstellung die Sicherungsscheibe 60000.

Die Sicherungsscheibe 60000 umfasst eine Durchgangsöffnung 61. Die Sicherungsscheibe 60000 weist eine erste Festigkeit und der Bolzen 8 weist eine zweite Festigkeit auf. Beispielsweise ist die erste Festigkeit kleiner als die zweite Festigkeit.

Die Sicherungsscheibe 60000 weist zur Vorfixierung des Bolzens 8 mittels Selbsthemmung an dem Innenumfang 62 der Durchgangsöffnung 61 ein Innengewinde 67 mit einer Innengewindesteigung auf. Der Bolzen 8 weist das mindestens eine Außengewinde 81 mit einer Außengewindesteigung auf. Die Innengewindesteigung des Innengewindes 67 in der Durchgangsöffnung 61 der Sicherungsscheibe 60000 weicht von der Außengewindesteigung des Außengewindes 81 des Bolzens 8 ab. Mit anderen Worten: Im zusammengesetzten Zustand ist der Bolzen 8 mittels Selbsthemmung von Außengewinde 81 und Innengewinde 67 in der Durchgangsöffnung 61 der Sicherungsscheibe 60000 vorfixiert und gehalten. Die Außengewindesteigung des Bolzens 8 ist hierzu verschieden zur Innengewindesteigung in der Durchgangsöffnung 61 der Sicherungsscheibe 60000. Alternativ kann die Durchgangsöffnung 61 auch mit einem zuvor beschriebenen Ring 13 zur Vorfixierung des Bolzens 8 in der Durchgangsöffnung 61 versehen sein. Alternativ kann die Durchgangsöffnung 61 und deren Innengewinde 67 mit einem Gummimaterial beschichten sein.

Durch die abweichende Steigung von Außengewinde 81 des Bolzens 8 und Innengewinde 67 der Sicherungsscheibe 60000 kommt es zu einer Selbsthemmung des Bolzens 8 in der Durchgangsöffnung 61 der Sicherungsscheibe 60000.

Der Innerdurchmesser der Durchgangsöffnung 61 kann zudem derart ausgelegt sein, dass die Sicherungsscheibe 60000 im durchgeschraubten Bereich des Bolzens 8 außer Eingriff zum Außengewinde 81 kommt. Der Bolzen 8 hat hierfür nur ein Teilgewinde mit zum Beispiel M10 und einen Schaftdurchmesser von etwa 9 mm. Der Bohrungsdurchmesser der Durchgangsöffnung 61 kann beispielsweise zwischen 9,0 mm und 9,7 mm liegen. Die Durchgangsöffnung 61 kann beispielsweise als M10x1,45 Gewinde zum Klemmen des Bolzens 8 ausgebildet sein. Dabei kann ein Bohrungsdurchmesser, insbesondere ein Innendurchmesser der Durchgangsöffnung 61, bei 9,5 mm liegen, damit ein Kerndurchmesser des Bolzens 8 nicht klemmt. Der Bolzen 8 weist mindestens ein Teilaußengewinde auf. Das Teilaußengewinde des Bolzens 8 ist erforderlich, um ein sicheres Erreichen der festen Verschraubung sicherzustellen.

Die Sicherungsscheibe 60000 weist am Außenumfang 65 zwei gegenüberliegende Aussparungen 66 auf. Die Aussparungen 66 sind bogenförmig ausgebildet. Auch kann die jeweilige Aussparung 66 eine andere geeignete Form, zum Beispiel eine mehreckige Form, aufweisen. Die jeweilige Aussparung 66 am Außenumfang 65 kann zum Beispiel mittels Prägung in die Außenkontur der Sicherungsscheibe 60000 eingebracht sein. Die Sicherungsscheibe 60000 wird beispielsweise mittels eines Stempelverfahrens und/oder Stanzverfahrens endseitig und/oder am Außenumfang 65 verformt. Die Aussparungen 66 sind als Verformungsbereiche 12 in die Sicherungsscheibe 60000 eingebracht. Dies ermöglicht ein einfaches und kostengünstiges Herstellungsverfahren mit nur wenigen Herstellungsschritten. Die Ausbildung der jeweiligen Aussparung 66 und eines jeweiligen Richtungselements 11, in Form einer Nase oder eines Vorsprungs, erfolgt zeitgleich.

Durch Stempeln und/oder Stanzen wird ein vorgegebener Bereich der Sicherungsscheibe 60000 in eine Hochrichtung derart verformt, dass eine Aussparung 66 auf einer ersten Oberflächenseite 68 und ein Richtungselement 11 auf einer der ersten Oberflächenseite 68 gegenüberliegenden zweiten Oberflächenseite 69 entsteht.

Somit weist der jeweilige Verformungsbereich 12 der Sicherungsscheibe 60000 eine Aussparung 66 und ein Richtungselement 11 auf. Die Verformungsbereiche 12 sind bogenförmig und/oder halbkreisförmig ausgebildet. Ein Durchmesser des jeweiligen Verformungsbereichs 12 liegt beispielsweise zwischen 8 mm bis 17 mm, beispielsweise 15 mm.

Die Verformungsbereiche 12 sind beispielsweise im Wesentlichen konusförmig, trichterförmig oder zylindrisch ausgebildet.

Die Sicherungsscheibe 60000 weist insbesondere eine Dicke oder Wandstärke von 3 mm bis 5 mm, insbesondere von 4 mm bis 4,5 mm, bevorzugt von 4,5 mm auf.

Die Sicherungsscheibe 60000 weist eine hohe Wandstärke und damit eine hohe Steifigkeit auf. Dies verbessert die Kraftübertragung von der Schraube oder dem Bolzen 8 zum zweiten Schienenelement 42, insbesondere einem Aluminiumprofil einer Unterschiene. Dabei kann weiterhin das Problem bestehen, dass direkt seitlich eines Bolzenkopfes 83 eine Spannungskonzentration im zweiten Schienenelement 42, insbesondere im Unterschienenprofil, gegeben ist. Die Sicherungsscheibe 60000 weist hierzu in diesen Bereichen die Aussparungen 66, insbesondere eine Freimachung, am Außenumfang 65 auf, um eine Verbesserung der Spannungsverteilung im zweiten Schienenelement 42, zum Beispiel einem Unterschienenprofil, zu erreichen.

Um einen fehlerhaften Einbau der Sicherungsscheibe 60000 in das zweite Schienenelement 42 zu vermeiden, weist die Sicherungsscheibe 60000 das jeweilige Richtungselement 11, insbesondere Richtungsnase oder Richtungsvorsprung, auf. Hierdurch kann die Sicherungsscheibe 60000 nicht verkehrt herum in den Führungskanal 47 eingeschoben werden. Das Richtungselement 11 ragt von der Oberflächenseite 69 der Sicherungsscheibe 60000 ab. Die jeweilige Aussparung 66 an der ersten Oberflächenseite 68 bildet demnach das Richtungselement 11 auf der zweiten Oberflächenseite 69. Im zusammengesetzten Zustand ist die erste Oberflächenseite 68 der Sicherungsscheibe 60000 dem Bodenbereich 43 des zweiten Schienenelements 42 zugewandt. Die zweite Oberflächenseite 69 ist in einen Profilraum des zweiten Schienenelements 42 gerichtet.

### Bezugszeichenliste

- 1: Fahrzeugsitz
- 2: Rückenlehne
- 3: Sitzteil
- 4: Längsverstelleinrichtung
- 41: erstes Schienenelement
- 42: zweites Schienenelement
- 43: Bodenbereich
- 44: Montagöffnung
- 45: Seitenwand
- 46: Führungsbahn
- 47: Führungskanal
- 48: Unterseite der Führungsbahn
- 5: Beschlag
- 6, 60, 600, 6000, 60000: Sicherungsscheibe
- 61: Durchgangsöffnung
- 62: Innenumfang
- 63: Nase
- 64: Kerbe
- 65: Außenumfang
- 66: Aussparung
- 67: Innengewinde
- 68, 69: Oberflächenseite
- 7: Befestigungsvorrichtung
- 8: Bolzen
- 81: Außengewinde
- 82: Außengewindegänge
- 83: Bolzenkopf
- 84: Schaft
- 841: Einführbereich
- 842: Teilgewindebereich
- 843: gewindefreier Bereich
- 9: Strukturelement
- 10: Befestigungselement
- 101: Mutterinnengewinde
- 11: Richtungselement
- 12: Verformungsbereich
- 13: Ring

- X: Längsrichtung
- Y: Querrichtung
- Z: Vertikalrichtung

## Patentansprüche

1. Befestigungsvorrichtung (7) für ein Schienenelement (42) einer Längsverstelleinrichtung (4), umfassend zumindest eine Sicherungsscheibe (60, 60000) mit einer Durchgangsöffnung (61) und einen Bolzen (8) mit mindestens einem Außengewinde (81), wobei der Bolzen (8) mittels Selbsthemmung in der Durchgangsöffnung (61) vorfixierbar und haltbar ist und wobei die Sicherungsscheibe (60, 60000) eine erste Festigkeit und
der Bolzen (8) eine zweite Festigkeit aufweisen, **dadurch gekennzeichnet, dass** die Sicherungsscheibe (60, 60000) in Hochrichtung derart verformt ist, dass zumindest eine Aussparung (66) auf einer ersten Oberflächenseite (68) und ein Richtungselement (11) auf einer der ersten Oberflächenseite (68) gegenüberliegenden zweiten Oberflächenseite (69) ausgebildet ist.

2. Befestigungsvorrichtung (7) nach Anspruch 1, wobei die erste Festigkeit kleiner als die zweite Festigkeit ist.

3. Befestigungsvorrichtung (7) nach Anspruch 1 oder 2, wobei die Sicherungsscheibe zur Vorfixierung des Bolzens (8) an einem Innenumfang (62) der Durchgangsöffnung (61) eine Anzahl von Nasen (63) aufweist.

4. Befestigungsvorrichtung (7) nach Anspruch 3, wobei zumindest zwei Nasen (63) vorgesehen sind, die mit einem Höhenversatz zueinander an dem Innenumfang (62) der Durchgangsöffnung (61) angeformt sind.

5. Befestigungsvorrichtung (7) nach Anspruch 3 oder 4, wobei im zusammengesetzten Zustand die Nasen (63) in Außengewindegänge (82) des Bolzens (8) eingreifend angeordnet sind.

6. Befestigungsvorrichtung (7) nach Anspruch 1 oder 2, wobei die Durchgangsöffnung (61) der Sicherungsscheibe mit einem Ring (13) versehen ist.

7. Befestigungsvorrichtung (7) nach Anspruch 6, wobei der Ring (13) vorgesehen ist, beim Fügen des Bolzens (8) mit der Sicherungsscheibe in einen selbsthemmenden Eingriff mit dem Bolzen (8) zu gelangen.

8. Befestigungsvorrichtung (7) nach einem der Ansprüche 6 bis 7, wobei der Ring (13) ein Dichtungselement ist.

9. Befestigungsvorrichtung (7) nach einem der Ansprüche 6 bis 8, wobei der Ring (13) mit der Durchgangsöffnung (61) zumindest stoffschlüssig verbunden ist.

10. Befestigungsvorrichtung (7) nach einem der Ansprüche 6 bis 9, wobei der Ring (13) in der Durchgangsöffnung (61) einvulkanisiert ist.

11. Befestigungsvorrichtung (7) nach Anspruch 1 oder 2, wobei die Sicherungsscheibe (60, 60000) zur Vorfixierung des Bolzens (8) an einem Innenumfang (62) der Durchgangsöffnung (61) ein Innengewinde (67) mit einer Innengewindesteigung aufweist, wobei die Innengewindesteigung der Durchgangsöffnung (61) verschieden zu einer Außengewindesteigung des Bolzens (8) ausgebildet ist.

12. Befestigungsvorrichtung (7) nach einem der vorhergehenden Ansprüche, wobei die zumindest eine Aussparung (66) bogenförmig oder eckig ausgeführt ist.

13. Befestigungsvorrichtung (7) nach einem der vorhergehenden Ansprüche, wobei das Richtungselement (11) in Form einer Nase oder eines Vorsprungs ausgebildet ist, welches von einer Oberflächenseite (69) der Sicherungsscheibe (6, 60, 60000) abragt.

14. Schienenelement (42) für eine Längsverstelleinrichtung (4), umfassend einen mit einem Strukturelement (9) eines Fahrzeugs verbindbaren Bodenbereich (43) mit mindestens einer Montageöffnung (44) und zwei vom Bodenbereich (43) abragende Seitenwände (45) und eine Befestigungsvorrichtung (7) nach einem der vorhergehenden Ansprüche 1 bis 13,
wobei die Befestigungsvorrichtung (7) derart zwischen den Seitenwänden (45) und am Bodenbereich (43) angeordnet ist, dass die Sicherungsscheibe (60, 60000) mit ihrer Durchgangsöffnung (61) über der Montageöffnung (44) des Schienenelements (42) liegt.

15. Schienenelement (42) nach Anspruch 14, wobei der Bolzen (8) durch die Durchgangsöffnung (61) der Sicherungsscheibe (60, 60000) hindurchführbar und in die Montageöffnung (44) des Schienenelements (42) teilweise eingreifend anordenbar ist.

## Claims

1. Fastening device (7) for a rail element (42) of a longitudinal adjustment device (4) comprising at least one securing plate (60, 60000) with a through-opening (61) and a bolt (8) with at least one external thread (81), wherein the bolt (8) is able to be prefixed and held in the through-opening (61) by means of self-locking, and wherein the securing plate (60, 60000) has a first strength and the bolt (8) has a second strength, **characterized in that** the securing plate (60, 60000) is deformed in the height direction in such a way that at least one recess (66) is formed on a first surface side (68) and a direction element (11) is formed on a second surface side (69) opposite the first surface side (68).

2. Fastening device (7) according to Claim 1, wherein the first strength is lower than the second strength.

3. Fastening device (7) according to Claim 1 or 2, wherein the securing plate has a number of noses (63) on an inner circumference (62) of the through-opening (61) to prefix the bolt (8).

4. Fastening device (7) according to Claim 3, wherein at least two noses (63) are provided, which are moulded with a height offset from one another on the inner circumference (62) of the through-opening (61).

5. Fastening device (7) according to Claim 3 or 4, wherein, in the assembled state, the noses (63) are arranged to engage in external thread flights (82) of the bolt (8).

6. Fastening device (7) according to Claim 1 or 2, wherein the through-opening (61) of the securing plate is provided with a ring (13).

7. Fastening device (7) according to Claim 6, wherein the ring (13) is provided to enter into self-locking engagement with the bolt (8) when the bolt (8) is joined with the securing plate.

8. Fastening device (7) according to one of Claims 6 to 7, wherein the ring (13) is a sealing element.

9. Fastening device (7) according to one of Claims 6 to 8, wherein the ring (13) is connected to the through-opening (61) at least in a materially integral manner.

10. Fastening device (7) according to one of Claims 6 to 9, wherein the ring (13) is vulcanized into the through-opening (61).

11. Fastening device (7) according to Claim 1 or 2, wherein the securing plate (60, 60000) has an internal thread (67) with an internal thread pitch on an inner circumference (62) of the through-opening (61) to prefix the bolt (8), wherein the internal thread pitch of the through-opening (61) is formed differently from an external thread pitch of the bolt (8).

12. Fastening device (7) according to one of the preceding claims, wherein the at least one recess (66) is designed to be arcuate or angular.

13. Fastening device (7) according to one of the preceding claims, wherein the direction element (11) is designed in the form of a nose or a protrusion which protrudes from a surface side (69) of the securing plate (6, 60, 60000).

14. Rail element (42) for a longitudinal adjustment device (4), comprising a bottom region (43) that is connectable to a structural element (9) of a vehicle and has at least one mounting opening (44) and two side walls (45) protruding from the bottom region (43), and a fastening device (7) according to any one of the preceding Claims 1 to 13,
wherein the fastening device (7) is arranged between the side walls (45) and on the bottom region (43) in such a manner that the securing plate (60, 60000) lies with its through-opening (61) over the mounting opening (44) of the rail element (42).

15. Rail element (42) according to Claim 14, wherein the bolt (8) is able to be guided through the through-opening (61) of the securing plate (60, 60000) and is able to be arranged so as to partially engage in the mounting opening (44) of the rail element (42).

## Revendications

1. Dispositif de fixation (7) pour un élément de rail (42) d'un appareil de réglage longitudinal (4), comprenant au moins un disque de sécurisation (60, 60000) avec une ouverture de passage (61) et un boulon (8) avec au moins un filetage extérieur (81), le boulon (8) pouvant être préfixé et maintenu par autoblocage dans l'ouverture de passage (61), et le disque de sécurisation (60, 60000) présentant une première résistance mécanique et le boulon (8) une deuxième résistance mécanique, **caractérisé en ce que** le disque de sécurisation (60, 60000) est déformé dans la direction verticale de telle sorte qu'au moins un évidement (66) est réalisé sur un premier côté de surface (68) et un élément de direction (11) est réalisé sur un deuxième côté de surface (69) opposé au premier côté de surface (68).

2. Dispositif de fixation (7) selon la revendication 1, dans lequel la première résistance est inférieure à la deuxième résistance.

3. Dispositif de fixation (7) selon la revendication 1 ou 2, dans lequel le disque de sécurisation présente un certain nombre d'ergots (63) pour la préfixation du boulon (8) sur une circonférence intérieure (62) de l'ouverture de passage (61).

4. Dispositif de fixation (7) selon la revendication 3, dans lequel au moins deux ergots (63) sont prévus, qui sont formés sur la circonférence intérieure (62) de l'ouverture de passage (61) avec un décalage en hauteur l'un par rapport à l'autre.

5. Dispositif de fixation (7) selon la revendication 3 ou 4, dans lequel, à l'état assemblé, les ergots (63) sont agencés de manière à s'engager dans des spires de filetage extérieur (82) du boulon (8).

6. Dispositif de fixation (7) selon la revendication 1 ou 2, dans lequel l'ouverture de passage (61) du disque de sécurisation est pourvue d'une bague (13).

7. Dispositif de fixation (7) selon la revendication 6, dans lequel la bague (13) est prévue pour venir en prise autobloquante avec le boulon (8) lorsque le boulon (8) est assemblé au disque de sécurisation.

8. Dispositif de fixation (7) selon l'une des revendications 6 à 7, dans lequel la bague (13) est un élément d'étanchéité.

9. Dispositif de fixation (7) selon l'une des revendications 6 à 8, **caractérisé en ce que** la bague (13) est reliée au moins par liaison de matière à l'ouverture de passage (61).

10. Dispositif de fixation (7) selon l'une des revendications 6 à 9, **caractérisé en ce que** la bague (13) est vulcanisée dans l'ouverture de passage (61).

11. Dispositif de fixation (7) selon la revendication 1 ou 2, dans lequel le disque de sécurisation (60, 60000) présente un filetage intérieur (67) avec un pas de filetage intérieur pour la préfixation du boulon (8) sur une circonférence intérieure (62) de l'ouverture de passage (61), le pas de filetage intérieur de l'ouverture de passage (61) étant réalisé différemment d'un pas de filetage extérieur du boulon (8).

12. Dispositif de fixation (7) selon l'une quelconque des revendications précédentes, dans lequel l'au moins un évidement (66) est conçu sous forme arquée ou angulaire.

13. Dispositif de fixation (7) selon l'une des revendications précédentes, **caractérisé en ce que** l'élément de direction (11) est réalisé sous la forme d'un ergot ou d'une saillie qui dépasse d'un côté de surface (69) du disque de sécurisation (6, 60, 60000).

14. Élément de rail (42) pour un appareil de réglage longitudinal (4), comprenant une zone de base (43) pouvant être reliée à un élément structurel (9) d'un véhicule avec au moins une ouverture de montage (44) et deux parois latérales (45) dépassant de la zone de base (43), et un dispositif de fixation (7) selon l'une des revendications 1 à 13 précédentes,
le dispositif de fixation (7) étant agencé entre les parois latérales (45) et sur la zone de base (43) de telle sorte que le disque de sécurisation (60, 60000) repose par son ouverture de passage (61) au-dessus de l'ouverture de montage (44) de l'élément de rail (42).

15. Élément de rail (42) selon la revendication 14, **caractérisé en ce que** le boulon (8) peut être guidé à travers l'ouverture de passage (61) du disque de sécurisation (60, 60000) et peut être agencé de manière à s'engager partiellement dans l'ouverture de montage (44) de l'élément de rail (42).
